(19) Europäisches Patentamt
European Patent Office
Office européen des brevets

(11) EP 4 604 012 A1

(12) EUROPEAN PATENT APPLICATION

(43) Date of publication:
20.08.2025 Bulletin 2025/34

(51) International Patent Classification (IPC):
G06N 3/045 (2023.01)      G06N 3/0475 (2023.01)
G06N 3/096 (2023.01)      G06N 3/084 (2023.01)

(21) Application number: 24157954.9

(22) Date of filing: 15.02.2024

(52) Cooperative Patent Classification (CPC):
G06N 3/0475; G06N 3/045; G06N 3/084;
G06N 3/096

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Robert Bosch GmbH
70442 Stuttgart (DE)

(72) Inventors:
• Khoreva, Anna
70197 Stuttgart (DE)
• Li, Yumeng
72070 Tuebingen (DE)
• Zhang, Dan
71229 Leonberg (DE)

Remarks:
Amended claims in accordance with Rule 137(2)
EPC.

(54) **TRANSFERRING KNOWLEDGE FROM A TEACHER NEURAL NETWORK TO A STUDENT NEURAL NETWORK**

(57)     A method (100) for training a student neural network (2) to adopt the behavior of a given teacher neural network (1) that is trained to perform a given processing on input images, comprising the steps of:
• providing (110) a set of training images x;
• producing (120), from at least one training image x, one or more style-augmented versions x' that
∘ have the same semantic content as the original training image x but
∘ differ from this original training image x in their style;

• processing (130) the training images x and the augmented versions x' by the teacher neural network (1) on the one hand, and by the student neural network (2) on the one hand;
• evaluating (140), using a predetermined loss function (3), to which extent outputs (2b) and/or intermediate work products (2a) produced by the student neural network (2) from each image x, x' are in agreement with the outputs (1b) and/or intermediate work products (1a) produced by the teacher neural network (1) from the same image x, x'; and
• optimizing (150) parameters (2c) that characterize the behavior of the student neural network (2) towards the goal of improving the value (3a) of the loss function (3).

Fig. 1

**Description**

The invention relates to the training of student neural networks having a smaller architecture based on the knowledge of a given already trained teacher network with a larger architecture.

Background

During the training of a neural network, the learned knowledge is stored in parameters that characterize the behavior of the neural network. The capacity for storing knowledge is therefore commensurate with the number of trainable parameters. So-called foundation models comprise very many parameters and have been trained with massive amounts of data. Examples for such foundation models include the CLIP model (Contrastive Language-Image Pre-Training) that learns the correspondence between natural language and images and the SAM model (Segment Anything Model) that can cut out any object out of any image.

Due to the large number of parameters, the use of a large foundation model for real-world applications can be computationally expensive and slow. In particular, the model will have to fit into mass storage at rest and into RAM when in use. For applications that run on hardware platforms that do not admit the use of the full foundation model due to lack of resources, student models with a smaller architecture are trained to mimic the behavior of the large foundation model that is then termed teacher model. If a sufficiently large set of training examples is used and the student model basically gives the same output as the teacher model for each of them, then the trained student model may be used as a fast, resource-saving, but still sufficiently accurate approximation for the teacher model.

Disclosure of the invention

The invention provides a method for training a student neural network to adopt the behavior of a given teacher neural network. This given teacher neural network is trained to perform a given processing on input images.

In the course of the method, a set of training images x is provided. These training images $x$ may be labelled with "ground truth" for the outputs that the student network should produce from them, but this is not required.

From at least one training image $x,$ one or more style-augmented versions $x'$ are produced. These style-augmented versions $x'$ have the same semantic content as the original training image $x.$ That is, in the context of the application at hand, the style-augmented versions $x'$ have the same meaning as the original training image $x.$ The style-augmented versions $x'$ differ from the original training image $x$ in their style. That is, style-augmented versions $x'$ represent different manners of rendering said same semantic meaning of the original training image $x.$

The training images $x$ and the augmented versions $x'$ are processed by the teacher neural network on the one hand, and by the student neural network on the one hand. This causes the teacher neural network and the student neural network to produce respective outputs. While producing these outputs, the teacher neural network and the student neural network generate intermediate work products. In particular, in a network that is organized into layers or other building blocks, the output of one such layer or building block may be regarded as an intermediate work product that is passed to the next layer or building block.

Using a predetermined loss function, it is then evaluated to which extent outputs and/or intermediate work products produced by the student neural network from each image $x, x'$ are in agreement with the outputs and/or intermediate work products produced by the teacher neural network from the same image $x, x'$. Parameters that characterize the behavior of the student neural network are then optimized towards the goal of improving the value of the loss function. These parameters may also include parameters that relate to the architecture of the student network itself. That is, the method not only serves to train a student neural network of a fixed architecture, but may also be used as a tool for Neural Architecture Search, NAS.

It was found that the augmentation of the training images $x$ by changing their style significantly expands the manifold of images on which it is evaluated whether the behavior of the student neural network corresponds to that of the teacher neural network as intended. If this manifold is sufficiently large, then it can be expected that the behavior of the student neural network will also sufficiently agree with that of the teacher neural network for input images unseen during training of the student neural network. Every new notion of style change that is put onto the training images x effectively adds the complete number of training images x to the final training dataset again.

Moreover, the data augmentation in this manner is not dependent on the concrete task that is being solved with the teacher neural network and the student neural network. This means that the method is not limited to, e.g., neural networks that are used for image classification (i.e., attributing classification scores with respect to one or more classes to the image as a whole). This also means that the student neural network may even solve a task that is different from the one solved by the teacher neural network.

Herein, the determination of whether outputs and/or intermediate work products "are in agreement" is not limited to a 1:1 comparison. Such a 1:1 comparison is not even possible in all cases. Since the student neural network is typically of a much smaller architecture than the teacher neural network, the outputs, and in particular the intermediate work products, of the student neural network will be of a different dimensionality (i.e., vectors or tensors of different sizes) than those of the teacher neural network. For example, aggregate quantities and/or statistical quantities may be computed from the outputs and/or intermediate work products, and these aggregate quantities and/or statistical quantities may be compared.

By means of the augmented training dataset that contains augmented versions *x'* of training images *x* on top of those training images *x,* the tendency of the training of the student neural network to overfit on the training images *x* is reduced. Typically, the dataset of the training images *x* is much smaller than the dataset of training images used for training the teacher neural network. For example, in an application where performance of a student neural network in the task of semantically segmenting images of city scenes is relevant, the prime training dataset Cityscapes for this application comprises only 2795 training images, and they all relate to situations in clear day. Without the data augmentation, it would be hard, if not impossible, to generalize the training of the student model to, e.g., nighttime, rain or snowy conditions.

In a particularly advantageous embodiment, producing an augmented version *x'* of a training image *x* comprises:

- extracting, from the training image *x,* a content *c*;
- obtaining, based at least in part on a style source image *y*, a style *s*; and
- processing, by a trained generative model *G*, the semantic content *c* and the style s into the sought augmented version *x'*.

In this manner, the content *c* from the training image *x* is mixed with the style *s* from the style source image *y*. This means that the new style s to be applied to the training image *x* need not be formulated explicitly. Rather, it can be supplied in an implicit manner in the form of the style source image *y*. This means that the style source image *y* may also comprise multiple simultaneous changes in style, and there is no need to disentangle them.

In particular,

- the extracting of the semantic content *c* from the training image *x*, and/or
- the obtaining of the style *s* based on the style source image *y* may be performed by feeding the training image *x*, respectively the style source image *y*, into a trained feature extractor network *F* that is configured to determine both a content *c* and a style *s* from an input image. This means that, for each of the training image *x* and the style source image *y*, a respective pair (*c*, *s*) of a content *c* and a style *s* is created. Only the content part c from the pair (*c*, *s*) corresponding to the training image *x,* and the style part s from the pair (*c*, *s*) corresponding to the style source image *y*, are used.

For example, the feature extractor network *F* may be trained in tandem with the generative model *G* such that, if a training image *x̄* is first decomposed into a pair (*c*, *s*) of a content *c* and a style *s*, and this pair (*c*, *s*) is fed to the generative model *G*, something close to the original training image *x̄* is reconstructed.

In a further advantageous embodiment, the style s is chosen to be an interpolation between a first style *s'* of the training image *x* and a second style *s″* of the style source image *y*. In this manner, based on one single style source image *y*, a plurality of style-augmented versions *x'* of one and the same training image *x* may be generated.

For example, the training image *x* may have been taken during daytime, so its style *s* is that of a daytime image. The style source image *y* may have been taken at nighttime, so its style is that of a nighttime image. By style interpolation, various degrees of the dusk transition between daytime and nighttime may then be created as new styles and applied to content *c* of the training image *x* to create new augmented versions *x'*.

In particular, the style of the source image *y* being different from that of the training image *x* may mean that the style source image y differs from one or more training images *x* in at least one aspect that is distinct from the content *c*. As discussed before, it is not required to name this aspect explicitly. However, by choosing this aspect, it can be actively steered in which direction the manifold of images on which agreement between the student neural network and the teacher neural network will be checked is expanded.

For example, the aspect in which the style source image *y* differs from all training images *x* may specifically comprises one or more of:

- a time of day at which the image was acquired;
- a season of the year in which the image was acquired;
- weather and/or lighting conditions under which the image was acquired;
- imperfections and/or disturbances in the image; and
- a camera setup with which the image was acquired.

These are typical variations that occur in real-world applications where input images are acquired by at least one sensor, and should not cause the student neural network that is being used in the application to suddenly divert in its behavior from the teacher neural network.

In a further particularly advantageous embodiment, at least one augmented version *x'* of a training image *x,* and/or at least one style source image *y,* is obtained from a trained generative diffusion model *D* using a text prompt that is indicative of the desired style of the augmented version *x'*, respectively of the style source image *y*. In this manner, if an explicit notion of the desired style change is available, this can be rendered by the trained generative diffusion model *D.* For example, given the training image *x*, the generative diffusion model $D$ may be instructed to create an augmented version $x'$ that still has a notion of the original training image $x$ but is modified as per the text prompt. Depending on how strong an adherence to the original training image $x$ is desired, on top of the style, the appearance of the content of the original training image $x$ may be changed by the generative diffusion model $D$ within the limits that this content still has the same semantic meaning in the application at hand. For example, if the original training image $x$ shows a castle, and the generative diffusion model D is instructed to convert this into a wintertime image, on top of this style change, the number and appearance of the towers of the castle might be changed. But the castle will still remain a castle.

In a further particularly advantageous embodiment, feature maps outputted by intermediate layers of the respective neural network are chosen as intermediate work products. For example, these feature maps may be outputted by convolutional layers. In particular, feature maps of different sizes may be processed (e.g., by evaluating summaries of the features contained therein) such that it may be checked how much they are in agreement with one another.

In a further particularly advantageous embodiment, the outputs of the neural network are chosen to be logits, and/or other unaggregated results outputted by the neural network. In particular, logits are outputs that are not yet normalized by a normalization function, such as the softmax function. Furthermore, they are not yet condensed into a final decision, such as a one-hot vector of classification scores that is outputted by the final, fully-connected layer of a neural network that is used as a classifier. In this manner, even subtle differences between the behaviors of the teacher neural network and the student neural network may be captured.

In a further particularly advantageous embodiment, the loss function measures a distance between outputs and/or intermediate work products produced by the teacher neural network on the one hand, and by the student neural network on the other hand. This distance may, for example, be measured in a common space to which the outputs, respectively the intermediate work products, of the teacher and student neural networks belong. If there is no such common space, e.g., because the outputs, respectively the intermediate work products, are of different sizes, another option is to transform both outputs, respectively both work products, into a common working space and measure the distance in this working space.

For example, if there is a common space, a norm, such as the L2-norm, may be used as a distance measure. Also, in particular, the architecture of the student neural network may be chosen to comprise at least one layer or other building block whose output has the same dimensionality as the output of a corresponding layer or other building block in the given teacher neural network. In this manner, a distance between the outputs of the corresponding layers may be directly measured in a common space. An example for such a loss function $L_{KD}$ is:

$$L_{KD} = \|f_t - f_s\|,$$

wherein $f_t$ and $f_s$ are the intermediate work products outputted by the teacher and student neural networks, respectively. Herein, the index KD stands for "knowledge distillation".

In a further particularly advantageous embodiment, the Kullback-Leibler divergence is chosen as a measure for the distance. This distance measure was originally intended to measure a distance between distinct distributions and therefore does not require the outputs, respectively the work products, of both the teacher and student neural network to be in a same space. Optionally, the outputs, respectively the work products, may also be divided by a scalar temperature constant $\tau$ in order to smooth the outputs, respectively the work products. One example of such a loss function $L_{KD}$ is:

$$L_{KD} = KL\left(\frac{p_t}{\tau}, \frac{p_s}{\tau}\right),$$

wherein $p_t$ and $p_s$ are the outputs or intermediate work products ("predictions") of the teacher and student neural networks, respectively.

In a further particularly advantageous embodiment, the student neural network is configured to produce outputs with respect to a given task. The training images $x$ are labelled with ground truth with respect to this given task. The loss function further measures a difference and/or distance between the outputs produced from each training image $x$ and the ground truth for the respective training image $x$. With $L_{task}$ as the task loss, the total loss function $L$ may then, for example, be:

$$L = L_{task} + L_{KD}.$$

In this manner, the student neural network may be trained both for a behavior corresponding to that of the teacher neural network and for solving the given task at the same time. For example, the given teacher neural network may be a generically trained foundation model that has been trained to perform a rather abstract processing of the input images on unlabeled data, whereas the student neural network may be trained towards solving a concrete task for which ground truth is available. Thus, rather than training a neural network for the given task from scratch, which is infeasible in many applications, the training of the student neural network may build upon the knowledge in the teacher neural network and refine this for the solving of the concrete task with only a small amount of training images $x$.

In a further particularly advantageous embodiment, the loss function further measures a difference and/or distance between the outputs produced from each augmented image version *x'* and the ground truth for the training image *x* to which this augmented version *x'* relates. Because the augmented image versions *x'* have the same semantic content as the training image *x* to which they relate, the ground truth with which the training image *x* is annotated ("labelled") is valid for the augmented versions *x'* as well. Thus, the obtaining of augmented versions *x'* as per the method proposed here also enlarges the pool of available training examples even for the supervised training to solve the given task, without incurring an additional overhead for labelling.

In a further particularly advantageous embodiment, the student neural network is configured as an image classifier, a semantic segmentation model, and/or as an object detector. These are typical tasks where a change in image style should not suddenly change the response of the student neural network. In this context, it is advantageous that the way of obtaining the augmented versions *x'* presented here is not tied to the task of classification.

The ultimate goal of training the student neural network is to use this in a real application, and in particular on a hardware platform that does not admit the execution of the teacher neural network. Therefore, in a further particularly advantageous embodiment, input images that have been acquired using at least one sensor are provided to the trained student neural network. From the outcome of the trained student neural network, an actuation signal is determined. A vehicle, a driving assistance system, a robot, a surveillance system, a quality inspection system, and/or a medical imaging system, is then actuated with the actuation signal. In this manner, the probability that the reaction of the respective actuated technical system in response to actuation with the actuation signal is appropriate in the situation characterized by the acquired input images is increased. In particular, a sudden change in image style, such as a change from daytime to nighttime, or from summer conditions to winter conditions, will not trigger a sudden, unexpected change of behavior. For example, when a car travels across the alps through a tunnel, the conditions on both ends of the tunnel may be completely different.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well.

Compute instances comprise virtual machines, containers or other execution environments that permit execution of machine-readable instructions in a cloud.

A non-transitory machine-readable data carrier, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention is described using Figures without any intention to limit the scope of the invention.

Description of the Figures

The Figures show:

Figure 1 Exemplary embodiment of the method 100 for training a student neural network 2;

Figure 2 Exemplary ways of comparing the behaviors of the teacher neural network 1 and the student neural network 2 based on outputs 1b, 2b (Figure 2a) and intermediate work products 1a, 2a (Figure 2b);

Figure 3 Exemplary data augmentation for the training towards solving a given task using unlabeled style source images *y*.

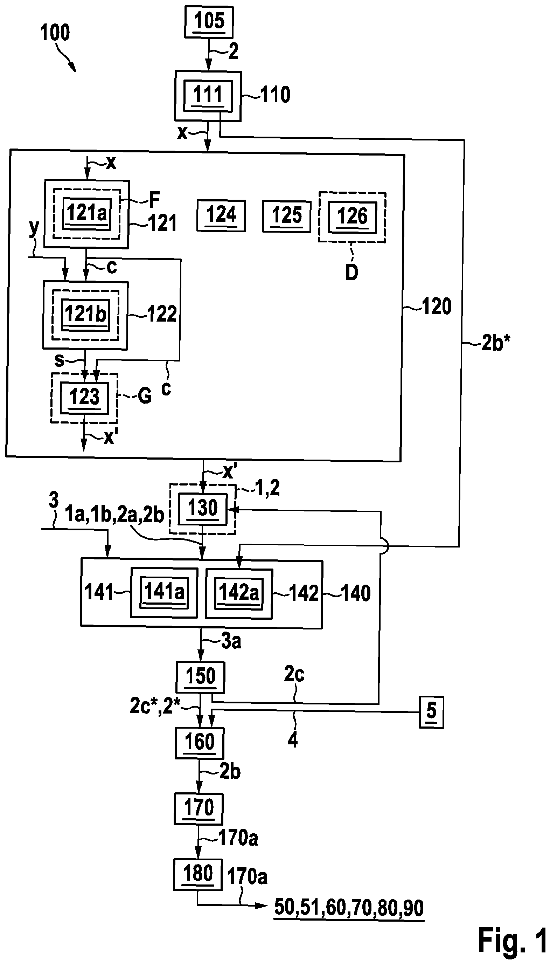

Figure 1 is a schematic flow chart of an example of the method 100 for training a student neural network 2 to adopt the behavior of a given teacher neural network 1. This teacher neural network 1 is trained to perform a given processing on input images.

In step 110, a set of training images *x* is provided.

Optionally, according to block 105, the student neural network 2 may be configured to produce outputs 2b with respect to a given task. According to block 111, the training images *x* may then be labelled with ground truth 2b* with respect to this given task.

In step 120, from at least one training image *x*, one or more style-augmented versions *x'* are produced. These style-augmented versions *x'* have the same semantic content as the original training image *x*, but at the same time differ from this original training image *x* in their style.

According to block 121, a content *c* may be extracted from the training image *x*. According to block 122, a style *s* may be obtained based at least in part on a style source image *y*. According to block 123, the semantic content c and the style s may then be processed into the sought augmented version *x'* by a trained generative model *G*.

According to block 121a, respectively 122a, the extracting 121, respectively the obtaining 122, may be performed by feeding the training image *x*, respectively the style source image *y*, into a trained feature extractor network *F* that is configured to determine both a content *c* and a style *s* from an input image.

According to block 124, the style s may be chosen to be an interpolation between a first style *s'* of the training image $x$ and a second style $s''$ of the style source image $y$.

According to block 125, the style source image $y$ may differ from one or more training images $x$ in at least one aspect that is distinct from the content $c$.

According to block 126, at least one augmented version $x'$ of a training image $x$, and/or at least one style source image $y$, may be obtained from a trained generative diffusion model $D$ using a text prompt that is indicative of the desired style of the augmented version $x'$, respectively of the style source image $y$.

In step 130, the training images x and the augmented versions $x'$ are processed

- by the teacher neural network 1 on the one hand, which produces intermediate work products 1a and outputs 1b; and
- by the student neural network 2 on the one hand, which produces intermediate work products 2a and outputs 2b.

In step 140, using a predetermined loss function 3, it is evaluated to which extent outputs 2b and/or intermediate work products 2a produced by the student neural network 2 from each image $x, x'$ are in agreement with the outputs 1b and/or intermediate work products 1a produced by the teacher neural network 1 from the same image $x, x'$. The outcome of the loss function 3 is a value 3a.

According to block 141, the loss function 3 may measure a distance between outputs 1b; 2b and/or intermediate work products 1a; 2a produced by the teacher neural network 1 on the one hand, and by the student neural network 2 on the other hand. In particular, according to block 141a, the Kullback-Leibler divergence may be chosen as a measure for the distance.

According to block 142, if the student neural network 2 is configured to solve a particular task according to block 105 and training images $x$ are labelled with corresponding ground truth 2b*, the loss function 3 may further measure a difference and/or distance between the outputs 2b produced from each training image $x$ and the ground truth 2b* for the respective training image $x$.

In particular, according to block 142a, the loss function 3 may further measure a difference and/or distance between the outputs 2b produced from each augmented image version $x'$ and the ground truth 2b* for the training image $x$ to which this augmented version $x'$ relates.

In step 150, parameters 2c that characterize the behavior of the student neural network 2 are optimized towards the goal of improving the value 3a of the loss function 3. The finally optimized state of the parameters 2c is labelled with the reference sign 2c* and also characterizes the fully trained state 2* of the student neural network 2.

In the example shown in Figure 1, in step 160, input images 4 that have been acquired using at least one sensor 5 are provided to the trained student neural network 2*. The trained student neural network 2* then produces an output 2b.

From this output 2b, in step 170, an actuation signal 170a is determined. In step 180, a vehicle 50, a driving assistance system 51, a robot 60, a surveillance system 70, a quality inspection system 80, and/or a medical imaging system 90, is actuated with this actuation signal 170a.

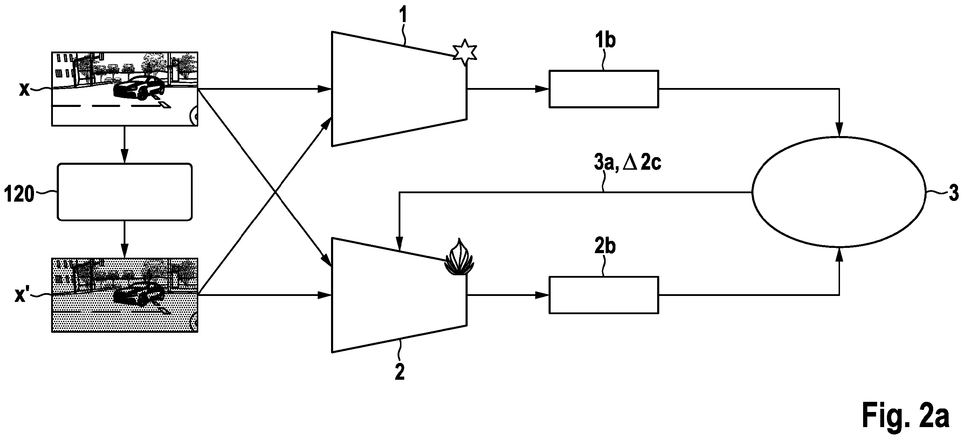

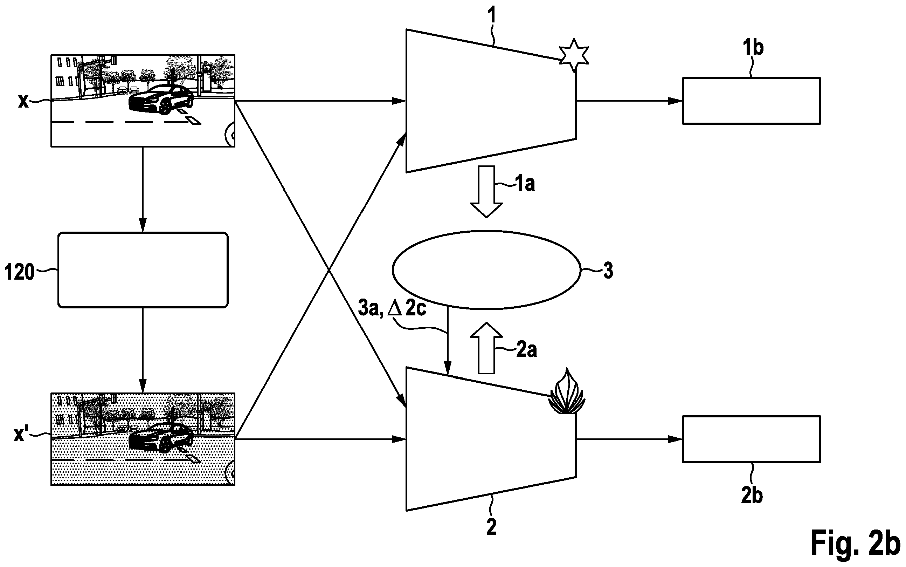

Figure 2 shows exemplary ways of comparing the behaviors of the teacher neural network 1 and the student neural network 2.

In the example shown in Figure 2a, from the training image $x$, an augmented version $x'$ is created according to step 120 of the method 100. Here, the training image $x$ showing a vehicle on a road was taken during daytime, but the new style applied to it is that of a nighttime image. Thus, the resulting augmented version $x'$ shows the same vehicle on the same road as in the original training image x, but at nighttime. Both the training image $x$ and the augmented version $x'$ are provided to both the teacher neural network 1 and the student neural network 2. The teacher neural network 1 produces outputs 1b, whereas the student neural network 2 produces outputs 2a. These outputs 1b and 2b are compared by the loss function 3. The snowflake symbol on the box representing the teacher neural network 1 signifies that the parameters that characterize the behavior of the teacher neural network 1 remain frozen. The flame symbol on the box representing the student neural network 2 signifies that the parameters 2c that characterize the behavior of the student neural network 2 are being optimized. That is, based on the value 3a of the loss function 3, an update $\Delta 2c$ for the parameters 2c of the student neural network 2 is computed and fed back to the student neural network 2.

In the example shown in Figure 2b, the augmented version $x'$ is created from the training image $x$ just as this is shown in Figure 2a. Also, in line with Figure 2a, both the training image $x$ and the augmented version $x'$ are provided to both the teacher neural network 1 and the student neural network 2. However, in contrast to Figure 2a, intermediate work products 1a and 2a produced by the teacher neural network 1 and the student neural network 2 are considered by the loss function 3. In a manner analogous to Figure 2a, an update $\Delta 2c$ for the parameters 2c of the student neural network 2 is computed and fed back to the student neural network 2. Meanwhile, the parameters of the teacher neural network 1 remain frozen.

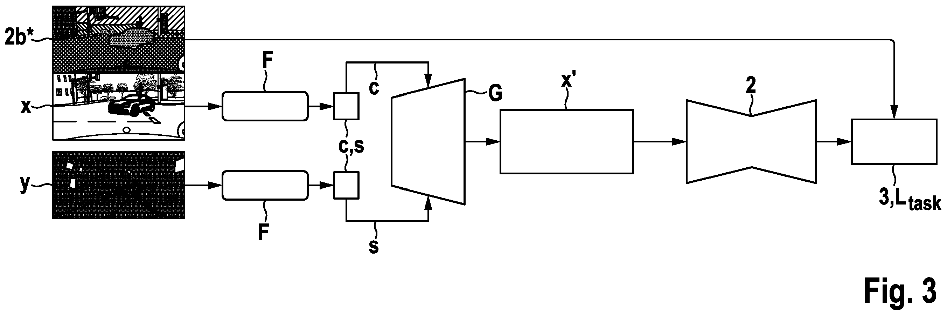

Figure 3 illustrates how the data augmentation presented above can also be used for the supervised training of the student neural network 2 towards solving a given task using unlabeled style source images $y$. In the example shown in Figure 3, the given task to be solved is semantic segmentation. The training image $x$ and the augmented version $x'$ are the same as in Figure 2. In addition, the source style image y from which the nighttime style was derived is shown.

Both the training image *x* and the source style image *y are* decomposed, by a trained feature extractor *F*, into a respective content *c* and style *s*. The content *c* derived from the training image *x* and the style derived from the source style image *y* are processed, by a trained generative model G, into the augmented version *x'*.

The training images *x* are labelled with corresponding ground truth 2b*. Because the augmented version *x'* has the same semantic content, it can be used to train the student neural network 2 towards the task of semantic segmentation just as well. Fulfilment of the task is measured according to the loss function 3 and its contribution $L_{task}$ presented above.

**Claims**

1. A method (100) for training a student neural network (2) to adopt the behavior of a given teacher neural network (1) that is trained to perform a given processing on input images, comprising the steps of:

   • providing (110) a set of training images *x*;
   • producing (120), from at least one training image *x*, one or more style-augmented versions *x'* that

      ○ have the same semantic content as the original training image *x* but
      ○ differ from this original training image *x* in their style;

   • processing (130) the training images *x* and the augmented versions *x'* by the teacher neural network (1) on the one hand, and by the student neural network (2) on the one hand;
   • evaluating (140), using a predetermined loss function (3), to which extent outputs (2b) and/or intermediate work products (2a) produced by the student neural network (2) from each image *x, x'* are in agreement with the outputs (1b) and/or intermediate work products (1a) produced by the teacher neural network (1) from the same image *x, x';* and
   • optimizing (150) parameters (2c) that characterize the behavior of the student neural network (2) towards the goal of improving the value (3a) of the loss function (3).

2. The method (100) of claim 1, wherein producing (120) an augmented version *x'* of a training image x comprises:

   • extracting (121), from the training image *x, a* content *c*;
   • obtaining (122), based at least in part on a style source image *y*, a style *s*; and
   • processing (123), by a trained generative model *G,* the semantic content c and the style s into the sought augmented version *x'*.

3. The method (100) of claim 2, wherein

   • the extracting (121) of the semantic content *c* from the training image *x*, and/or
   • the obtaining (122) of the style *s* based on the style source image *y* is performed (121a, 122a) by feeding the training image *x*, respectively the style source image *y*, into a trained feature extractor network *F* that is configured to determine both a content *c* and a style *s* from an input image.

4. The method (100) of any one of claims 2 to 3, wherein the style s is chosen (124) to be an interpolation between a first style *s'* of the training image *x* and a second style *s″* of the style source image *y*.

5. The method (100) of any one of claims 2 to 4, wherein the style source image *y* differs (125) from one or more training images *x* in at least one aspect that is distinct from the content *c*.

6. The method (100) of claim 4, wherein the aspect in which the style source image *y* differs from all training images *x* specifically comprises one or more of:

   • a time of day at which the image was acquired;
   • a season of the year in which the image was acquired;
   • weather and/or lighting conditions under which the image was acquired;
   • imperfections and/or disturbances in the image; and
   • a camera setup with which the image was acquired.

7. The method (100) of any one of claims 1 to 6, wherein at least one augmented version *x'* of a training image *x,* and/or at least one style source image *y*, is obtained (126) from a trained generative diffusion model *D* using a text prompt that is indicative of the desired style of the augmented version *x'*, respectively of the style source image *y*.

8. The method (100) of any one of claims 1 to 7, wherein feature maps outputted by intermediate layers of the respective neural network (1, 2) are chosen as intermediate work products (1a, 2a).

9. The method (100) of any one of claims 1 to 8, wherein the outputs (1b, 2b) of the neural network (1, 2) are chosen to be logits, and/or other unaggregated results outputted by the neural network (1, 2).

10. The method (100) of any one of claims 1 to 9, wherein the loss function (3) measures (141) a distance between outputs (1b; 2b) and/or intermediate work products (1a; 2a) produced by the teacher neural network (1) on the one hand, and by the student neural network (2) on the other hand.

11. The method (100) of claim 10, wherein the Kullback-Leibler divergence is chosen (141a) as a measure for the distance.

12. The method (100) of any one of claims 1 to 11, wherein

    • the student neural network (2) is configured (105) to produce outputs (2b) with respect to a given task;
    • the training images $x$ are labelled (111) with ground truth (2b*) with respect to this given task; and
    • the loss function (3) further measures (142) a difference and/or distance between the outputs (2b) produced from each training image $x$ and the ground truth (2b*) for the respective training image $x$.

13. The method (100) of claim 12, wherein the loss function (3) further measure (142a) a difference and/or distance between the outputs (2b) produced from each augmented image version $x'$ and the ground truth (2b*) for the training image $x$ to which this augmented version $x'$ relates.

14. The method (100) of any one of claims 1 to 13, wherein the student neural network (2) is configured as an image classifier, a semantic segmentation model, and/or as an object detector.

15. The method (100) of any one of claims 1 to 14, further comprising:

    • providing (160) input images (4) that have been acquired using at least one sensor (5) to the trained student neural network (2*);
    • determining (170) an actuation signal (170a) from the outcome (2b) of the trained student neural network (2*); and
    • actuating (180) a vehicle (50), a driving assistance system (51), a robot (60), a surveillance system (70), a quality inspection system (80), and/or a medical imaging system (90), with the actuation signal (170a).

16. A computer program, comprising machine-readable instructions that, when executed on one or more computers and/or compute instances, cause the one or more computers and/or compute instances to perform the method (100) of any one of claims 1 to 15.

17. A non-transitory machine-readable data carrier and/or a download product with the computer program of claim 16.

18. One or more compute instances with the computer program of claim 16, and/or with the machine-readable data carrier and/or download product of claim 17.

**Amended claims in accordance with Rule 137(2) EPC.**

1. A computer-implemented method (100) for training a student neural network (2) to adopt the behavior of a given teacher neural network (1) that is trained to perform a given processing on input images, comprising the steps of:

    • providing (110) a set of training images x;
    • producing (120), from at least one training image x, one or more style-augmented versions x' that

        ○ have the same semantic content as the original training image x but
        ○ differ from this original training image x in their style;

    • processing (130) the training images $x$ and the augmented versions $x'$ by the teacher neural network (1) on the one hand, and by the student neural network (2) on the one hand;
    • evaluating (140), using a predetermined loss function (3), to which extent outputs (2b) and/or intermediate work products (2a) produced by the student neural network (2) from each image $x, x'$ are in agreement with the outputs (1b) and/or intermediate work products (1a) produced by the teacher neural network (1) from the same image $x, x'$; and
    • optimizing (150) parameters (2c) that characterize the behavior of the student neural network (2) towards the goal of improving the value (3a) of the loss function (3).

2. The method (100) of claim 1, wherein producing (120) an augmented version x' of a training image x comprises:

    • extracting (121), from the training image x, a content c;
    • obtaining (122), based at least in part on a style source image y, a style $s$; and
    • processing (123), by a trained generative model $G$, the semantic content c and the style s into the sought augmented version x'.

3. The method (100) of claim 2, wherein

• the extracting (121) of the semantic content $c$ from the training image x, and/or

• the obtaining (122) of the style s based on the style source image y is performed (121a, 122a) by feeding the training image x, respectively the style source image y, into a trained feature extractor network F that is configured to determine both a content c and a style s from an input image.

4. The method (100) of any one of claims 2 to 3, wherein the style $s$ is chosen (124) to be an interpolation between a first style s' of the training image x and a second style s″ of the style source image y.

5. The method (100) of any one of claims 2 to 4, wherein the style source image y differs (125) from one or more training images x in at least one aspect that is distinct from the content c.

6. The method (100) of claim 4, wherein the aspect in which the style source image y differs from all training images x specifically comprises one or more of:

• a time of day at which the image was acquired;
• a season of the year in which the image was acquired;
• weather and/or lighting conditions under which the image was acquired;
• imperfections and/or disturbances in the image; and
• a camera setup with which the image was acquired.

7. The method (100) of any one of claims 1 to 6, wherein at least one augmented version x' of a training image x, and/or at least one style source image y, is obtained (126) from a trained generative diffusion model D using a text prompt that is indicative of the desired style of the augmented version x', respectively of the style source image y.

8. The method (100) of any one of claims 1 to 7, wherein feature maps outputted by intermediate layers of the respective neural network (1, 2) are chosen as intermediate work products (1a, 2a).

9. The method (100) of any one of claims 1 to 8, wherein the outputs (1b, 2b) of the neural network (1, 2) are chosen to be logits, and/or other unaggregated results outputted by the neural network (1, 2).

10. The method (100) of any one of claims 1 to 9, wherein the loss function (3) measures (141) a distance between outputs (1b; 2b) and/or intermediate work products (1a; 2a) produced by the teacher neural network (1) on the one hand, and by the student neural network (2) on the other hand.

11. The method (100) of claim 10, wherein the Kullback-Leibler divergence is chosen (141a) as a measure for the distance.

12. The method (100) of any one of claims 1 to 11, wherein

• the student neural network (2) is configured (105) to produce outputs (2b) with respect to a given task;
• the training images x are labelled (111) with ground truth (2b*) with respect to this given task; and
• the loss function (3) further measures (142) a difference and/or distance between the outputs (2b) produced from each training image x and the ground truth (2b*) for the respective training image x.

13. The method (100) of claim 12, wherein the loss function (3) further measure (142a) a difference and/or distance between the outputs (2b) produced from each augmented image version x' and the ground truth (2b*) for the training image x to which this augmented version x' relates.

14. The method (100) of any one of claims 1 to 13, wherein the student neural network (2) is configured as an image classifier, a semantic segmentation model, and/or as an object detector.

15. The method (100) of any one of claims 1 to 14, further comprising:

• providing (160) input images (4) that have been acquired using at least one sensor (5) to the trained student neural network (2*);
• determining (170) an actuation signal (170a) from the outcome (2b) of the trained student neural network (2*); and
• actuating (180) a vehicle (50), a driving assistance system (51), a robot (60), a surveillance system (70), a quality inspection system (80), and/or a medical imaging system (90), with the actuation signal (170a).

16. A computer program, comprising machine-readable instructions that, when executed on one or more computers and/or compute instances, cause the one or more computers and/or compute instances to perform the method (100) of any one of claims 1 to 15.

17. A non-transitory machine-readable data carrier and/or a download product with the computer program of claim 16.

18. One or more compute instances with the computer program of claim 16, and/or with the machine-readable data carrier and/or download product of claim 17.

Fig. 1

**Fig. 2a**

Fig. 2b

Fig. 3

2b*

x

y

F

F

c

c,s

s

G

x'

2

3,L<sub>task</sub>

EP 4 604 012 A1

14

Europäisches
Patentamt

European
Patent Office

Office européen
des brevets

**EUROPEAN SEARCH REPORT**

**Application Number**

EP 24 15 7954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG HUAN ET AL: "Collaborative Distillation for Ultra-Resolution Universal Style Transfer", 2020 IEEE/CVF CONFERENCE ON COMPUTER VISION AND PATTERN RECOGNITION (CVPR), IEEE, 13 June 2020 (2020-06-13), pages 1857-1866, XP033805214, DOI: 10.1109/CVPR42600.2020.00193 [retrieved on 2020-08-03] * the whole document * | 1-18 | INV. G06N3/045 G06N3/0475 G06N3/096 G06N3/084 |
| A | Adriana Romero ET AL: "FitNets: hints for thin deep nets", arXiv:1412.6550v4, 27 March 2015 (2015-03-27), XP055349753, Retrieved from the Internet: URL:https://arxiv.org/abs/1412.6550v4 [retrieved on 2017-02-27] * Abstract, Sections 1, 2 * | 1-18 | |
| A | HIDAYATURRAHMAN ET AL: "Shrinking Neural Style Transfer Model with Knowledge Distillation", 2022 3RD INTERNATIONAL CONFERENCE ON ARTIFICIAL INTELLIGENCE AND DATA SCIENCES (AIDAS), IEEE, 7 September 2022 (2022-09-07), pages 101-106, XP034213140, DOI: 10.1109/AIDAS56890.2022.9918806 [retrieved on 2022-10-26] * Abstract, Section III, Figure 3 * | 1-18 | **TECHNICAL FIELDS SEARCHED (IPC)** G06N |

-/--

The present search report has been drawn up for all claims

| Place of search | Date of completion of the search | Examiner |
|---|---|---|
| The Hague | 15 July 2024 | Efthymiadis, K |

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 15 7954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TRIPATHI ACHYUT MANI ET AL: "Data augmentation guided knowledge distillation for environmental sound classification", ARXIV,, vol. 489, 15 March 2022 (2022-03-15), pages 59-77, XP087098849, DOI: 10.1016/J.NEUCOM.2022.03.025 [retrieved on 2022-03-15] * Abstract, Section 2.2, Figure 3 * | 1-18 | |
| A | HUAN WANG ET AL: "What Makes a "Good" Data Augmentation in Knowledge Distillation -- A Statistical Perspective", ARXIV.ORG, CORNELL UNIVERSITY LIBRARY, 201 OLIN LIBRARY CORNELL UNIVERSITY ITHACA, NY 14853, 18 October 2022 (2022-10-18), XP091347538, * Abstract, Sections 1, 2, 3, 5 * | 1-18 | |
| A | HONG MINUI ET AL: "StyleMix: Separating Content and Style for Enhanced Data Augmentation", 2021 IEEE/CVF CONFERENCE ON COMPUTER VISION AND PATTERN RECOGNITION (CVPR), IEEE, 20 June 2021 (2021-06-20), pages 14857-14865, XP034010303, DOI: 10.1109/CVPR46437.2021.01462 [retrieved on 2021-10-15] * Abstract, Sections 1, 3 * | 1-18 | **TECHNICAL FIELDS SEARCHED    (IPC)** |

-/--

The present search report has been drawn up for all claims

| Place of search | Date of completion of the search | Examiner |
|---|---|---|
| The Hague | 15 July 2024 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 15 7954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XU ZHENG ET AL: "STaDA: Style Transfer as Data Augmentation", ARXIV.ORG, CORNELL UNIVERSITY LIBRARY, 201 OLIN LIBRARY CORNELL UNIVERSITY ITHACA, NY 14853, 3 September 2019 (2019-09-03), XP081472336, DOI: 10.5220/0007353401070114 * Abstract, Sections 1, 3 * | 1-18 | |
| | ----- | | |
| A | YIJIE XU ET AL: "Cross-Domain Image Classification through Neural-Style Transfer Data Augmentation", ARXIV.ORG, CORNELL UNIVERSITY LIBRARY, 201 OLIN LIBRARY CORNELL UNIVERSITY ITHACA, NY 14853, 12 October 2019 (2019-10-12), XP081514540, * Abstract, Sections 1, 2.3, Figure 1 * | 1-18 | |
| | ----- | | |

TECHNICAL FIELDS
SEARCHED (IPC)

The present search report has been drawn up for all claims

| Place of search | Date of completion of the search | Examiner |
|---|---|---|
| The Hague | 15 July 2024 | Efthymiadis, K |

EPO FORM 1503 03.82 (P04C01)